# EUROPEAN PATENT APPLICATION

(11) **EP 4 611 152 A1**
(43) Date of publication of application: **03.09.2025**
(21) Application number: 24792784.1
(22) Date of filing: 18.01.2024
(51) Int. Cl.: H01M 50/383, H01M 50/35, H01M 50/204

(54) **BATTERY RACK AND ENERGY STORAGE SYSTEM**

(30) Priority: 19.04.2023 KR 20230051545
(71) Applicant: SK On Co., Ltd., Seoul 03161 (KR)
(72) Inventor: PARK, Byung-Jun, Daejeon 34124 (KR); GOO, Bon-A, Daejeon 34124 (KR); PARK, Sin-Ho, Daejeon 34124 (KR); PARK, Chan-Ho, Daejeon 34124 (KR)
(74) Representative: Prüfer & Partner mbB Patentanwälte · Rechtsanwälte
(86) International application number: PCT/KR2024/000882
(87) International publication number: WO 2024/219596

(57) **Abstract**

An energy storage system according to an embodiment of the present invention comprises: a plurality of battery modules arranged in a stacked manner; and a battery rack comprising a pair of thermal runaway blocking kits which cover the plurality of battery modules on both sides thereof, wherein the pair of thermal runaway blocking kits may comprise a body portion on which the plurality of battery modules are mounted and which comprise an empty space in which gas discharged from one or more of the battery modules is confined, and a side frame coupled to the body portion so as to cover the empty space.

## Description

### Technical Field

The present disclosure relates to a battery rack and an energy storage system.

### Background Art

Recently, as interest in energy has increased due to serious climate change worldwide, smart grid and renewable energy technologies are in the spotlight. However, renewable energy has the disadvantage of being an unstable energy supply, so that technologies that may compensate therefor are required. Accordingly, energy storage systems (ESS) are used to compensate for the disadvantages of renewable energy and build smart grids more efficiently.

An energy storage system is a system that stores electricity generated by a storage system and supplies the stored electricity when electricity is needed, thereby increasing the overall power usage efficiency.

Meanwhile, as the use and distribution of energy storage systems increase, accidents related to fire and explosion are also increasing. Fires and explosions in energy storage systems are not simple accidents but accidents that may cause casualties, so that prevention and management are especially required.

As accidents related to energy storage systems and the risks therefrom come to the fore, efforts are actively made to establish energy storage system-related standards and safety regulations that may be applied to the design, manufacturing, supply, operation, and maintenance of energy storage systems. Specifically, fire accidents in energy storage systems using lithium-ion batteries have occurred frequently recently, and fire safety is being strictly required.

Due to the nature of energy storage systems comprised of a plurality of battery modules, if a fire occurs in a single battery module, the fire may spread to adjacent battery modules and expand to a fire in the entire system.

In relation thereto, the North American standard UL9540A recently issued an evaluation report on fire propagation, encouraging installation of only energy storage systems without fire propagation.

### Disclosure of Invention

### Technical Problem

An aspect to the present disclosure is to improve the safety of an energy storage system, and in particular, to prevent thermal runaway in a rack unit.

### Solution to Problem

An energy storage system according to an embodiment of the present disclosure may include: a plurality of battery modules arranged in a stacked manner; and a battery rack including a pair of thermal runaway blocking kits covering the plurality of battery modules on both sides thereof, and the pair of thermal runaway blocking kits may include: a body portion on which the plurality of battery modules are mounted and which comprises an empty space in which gas discharged from one or more battery modules is confined; and a side frame coupled to the body portion to cover the empty space.

According to an embodiment of the present disclosure, the body portion may include: a first frame including a protrusion portion on which the plurality of battery modules are mounted; and a second frame coupled to the first frame in a position spaced apart from one surface of the first frame having the protrusion portion formed therein at a predetermined distance, and the empty space may be provided between the first frame and the second frame.

According to an embodiment of the present disclosure, the body portion may further include a slot provided in the protrusion portion to allow the plurality of battery modules and the empty space to communicate with each other.

According to an embodiment of the present disclosure, the body portion may further include a rib extending from the protrusion portion toward the empty space, and an end of the rib may have a shape inclined to face the slot.

According to an embodiment of the present disclosure, the side frame may include a plurality of venting holes through which gas confined in the empty space is discharged to the outside in a longitudinal direction of the side frame.

Each of a side frame included in a thermal runaway blocking kit disposed on one surface of the plurality of battery modules, among the pair of thermal runaway blocking kits, and a side frame included in a thermal runaway blocking kit disposed on the other surface thereof may include the plurality of venting holes at different heights.

According to an embodiment of the present disclosure, the side frame may further include a plurality of tubes formed to protrude toward the empty space in positions corresponding to the plurality of venting holes.

According to an embodiment of the present disclosure, one or more of the battery racks are provided in a direction, perpendicular to a stacking direction of the plurality of battery modules.

A battery rack according to an embodiment of the present disclosure may include: a plurality of battery modules arranged in a stacked manner in one direction; and a plurality of covers disposed on an outer side of the plurality of battery modules, and the plurality of covers may be disposed on both sides of the plurality of battery modules, and the battery rack may include a pair of thermal runaway blocking kits including: a body portion on which the plurality of battery modules are mounted and which includes an empty space in which gas discharged from one or more battery modules is confined; and a side frame coupled to the body portion to cover the empty space.

According to an embodiment of the present disclosure, the body portion may include: a first frame including a protrusion portion provided in an arrangement direction of the plurality of battery modules so that the plurality of battery modules are mounted, and having a ' 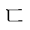 ' shape, and a second frame having a plate shape, and coupled to an open portion of the first frame, and the empty space may be provided between the first frame and the second frame.

According to an embodiment of the present disclosure, the body portion may further include a slot provided in the protrusion portion to allow the plurality of battery modules and the empty space to communicate with each other in an arrangement direction of the plurality of battery modules.

According to an embodiment of the present disclosure, the body portion may further include a rib extending from the protrusion portion toward the empty space, and an end of the rib may have a shape inclined to face the slot.

According to an embodiment of the present disclosure, the side frame may include a plurality of venting holes through which gas confined in the empty space is discharged to the outside.

According to an embodiment of the present disclosure, the side frame may further include a plurality of tubes formed to protrude toward the empty space in positions corresponding to the plurality of venting holes.

According to an embodiment of the present disclosure, the plurality of covers may include a lower cover disposed to cover the plurality of battery modules from a lower side thereof, and the pair of thermal runaway blocking kits may be disposed on an inner side of the lower cover.

### Advantageous Effects of Invention

An energy storage system according to an embodiment of the present disclosure may have high stability against fire. Additionally, since the energy storage system is configured to block thermal runaway in a rack unit, it may be possible to enable miniaturization and/or diversification applications of design and sales units.

### Brief Description of Drawings

FIG. 1 is a schematic perspective view of an energy storage system according to an embodiment of the present disclosure.
FIG. 2 is a schematic exploded perspective view of an energy storage system according to an embodiment of the present disclosure.
FIG. 3 is a perspective view of a thermal runaway blocking kit according to an embodiment of the present disclosure.
FIG. 4 is an exploded perspective view of a thermal runaway blocking kit according to an embodiment of the present disclosure.
FIG. 5 is an enlarged view of part A of FIG. 3.
FIG. 6 is a cross-sectional view of a body portion of a thermal runaway blocking kit according to an embodiment of the present disclosure.
FIG. 7 is a view illustrating an outer side of a side portion of a thermal runaway blocking kit according to an embodiment of the present disclosure.
FIG. 8 is a view illustrating an inner side of a side portion of a thermal runaway blocking kit according to an embodiment of the present disclosure.
FIG. 9 is a view illustrating a state in which a battery module is mounted on a thermal runaway blocking kit according to an embodiment of the present disclosure and a venting path.

### Mode for Invention

Hereinafter, embodiments of the disclosed technology will be described in detail with reference to the drawings. However, the concept of the disclosed technology is not limited to presented embodiments.

For example, those skilled in the art who understand the concept of disclosed technology may easily propose other embodiments included within the scope of the disclosed technology by adding, modifying, or deleting components, but these additions, modifications, or deletions should be construed as being included in the scope of the disclosed technology.

In the following descriptions, the terms "connected to" or "coupled to" are used to designate a connection or coupling of one element to another element and include both a case where an element is "directly connected or coupled to" another element and a case where an element is "indirectly connected or coupled to" another element via still another element. Furthermore, when a certain portion "includes" or "comprises" a certain component, this indicates that other components are not excluded and may be further included unless otherwise noted.

Furthermore, it will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the disclosed technology.

The present disclosure relates to a battery rack and an energy storage system. More specifically, the present disclosure relates to a battery rack having a structure for responding to a fire of a battery cell or a module, and an energy storage system including the same.

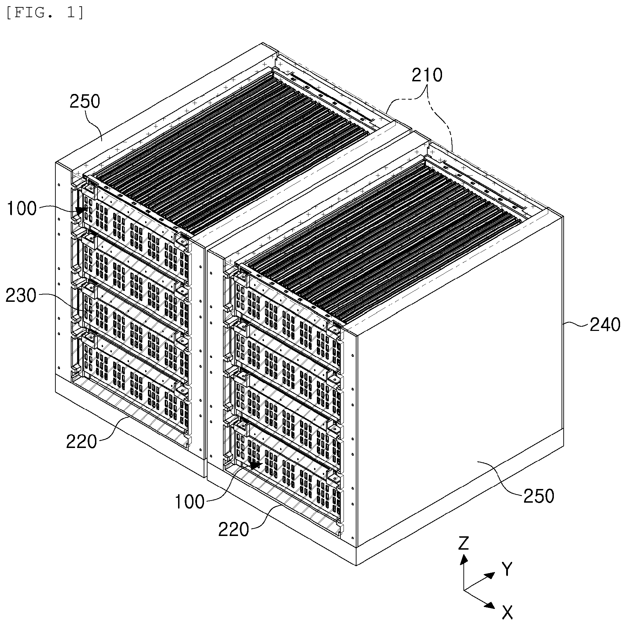

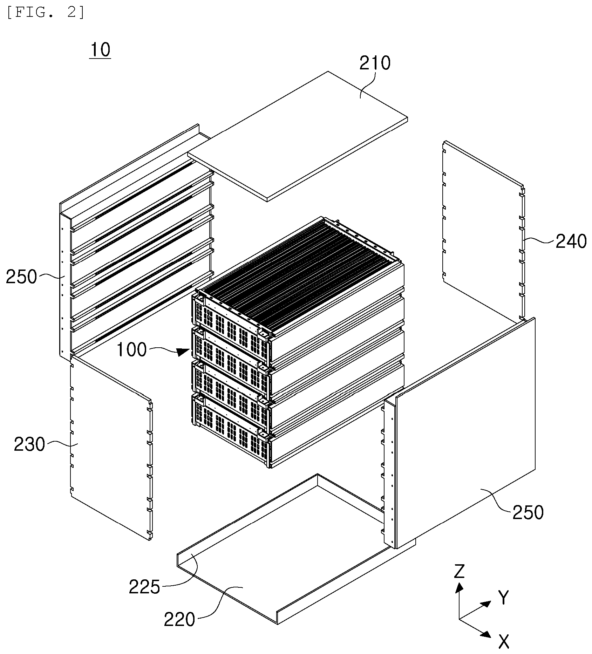

FIG. 1 is a schematic perspective view of an energy storage system according to an embodiment of the present disclosure, and FIG. 2 is a schematic exploded perspective view of an energy storage system according to an embodiment of the present disclosure.

Referring to FIGS. 1 and 2, an energy storage system 10 according to an embodiment of the present disclosure may include a plurality of battery modules 100 and a battery rack (hereinafter, a rack) 200 in which the plurality of battery modules 100 are accommodated.

Additionally, although not specifically illustrated in the drawings, according to an embodiment of the present disclosure, the energy storage system 10 may include various components for ensuring safety. For example, the energy storage system 10 may include a battery protection device for monitoring voltage/current performance, switching charge/discharge modes, and blocking overcurrent. Additionally, the energy storage system 10 may include a fan for cooling the plurality of battery modules 100 and a fire extinguishing device for extinguishing a fire occurring in the battery module 100.

The plurality of battery modules 100 may include one or more battery cells. The battery cell may be a secondary battery, and may be any one of a pouch-type secondary battery, a square secondary battery, and a cylindrical secondary battery.

The rack 200 may accommodate the plurality of battery modules 100 and one or more racks 200 may be provided.

The rack 200 may include a plurality of covers arranged on an outer side of the plurality of battery modules 100. For example, the rack 200 may include an upper cover 210 and a lower cover 220 disposed to cover the plurality of battery modules 100 from an upper side and a lower side, respectively, a front cover 230 and a rear cover 240 disposed to cover a front side and a rear side of the plurality of battery modules 100, respectively. Additionally, the rack 200 may include a side cover 250 disposed to cover a left side and a right side of the plurality of battery modules 100, respectively. For example, as illustrated in FIG. 2, the lower cover 220 may include an extension portion 225 extending in a height direction from three corners, and the side cover 250 may be disposed on an inner side of the extension portion 225.

The plurality of covers described above may be mutually coupled, and for example, the respective covers may be coupled to each other through welding in the overlapping portions. However, a method of coupling the covers is not limited thereto, and the covers may also be coupled through fastening members such as bolts and nuts.

The plurality of battery modules 100 may be arranged in a stacked manner at a predetermined interval in a height direction (Z-direction based on the drawing) inside the rack 200, and as an example, four battery modules 100 may be arranged in the height direction inside one rack 200 as illustrated in the drawing. Additionally, the plurality of battery modules 100 may be arranged in two rows as illustrated in the drawing, but are not limited thereto and may be arranged in one row or three or more rows. That is, the plurality of battery modules 100 may be arranged in rows corresponding to the number of racks 200 forming the energy storage system 10.

Meanwhile, when an event such as thermal runaway occurs in some of the plurality of battery modules 100 accommodated inside the rack 200, the flame or gas emitted from the battery module 100 may affect neighboring battery modules 100, which may lead to a chain reaction.

The energy storage system 10 according to an embodiment of the present disclosure proposes a structure capable of suppressing or minimizing the propagation of heat and flame through the rack 200. Specifically, the side cover 250 disposed to cover a left side and a right side of the plurality of battery modules 100 in the present disclosure may be configured to perform the above-described function.

In the following description, the thermal runaway blocking kit 250 may refer to the same component as the side cover.

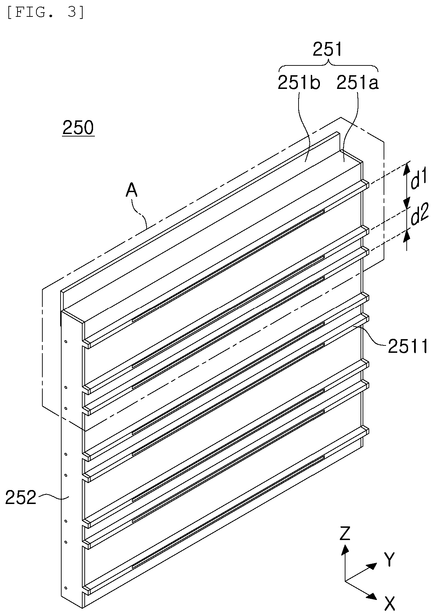

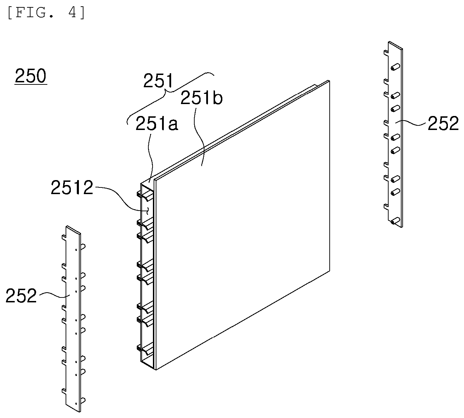

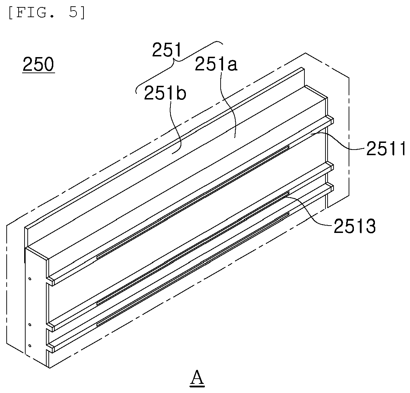

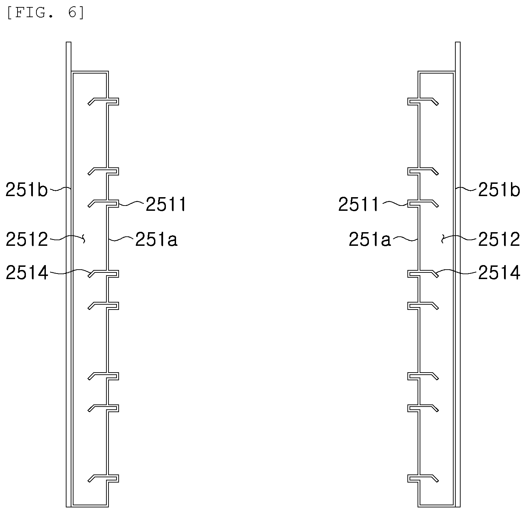

FIG. 3 is a perspective view of a thermal runaway blocking kit according to an embodiment of the present disclosure, and FIG. 4 is an exploded perspective view of a thermal runaway blocking kit according to an embodiment of the present disclosure. FIG. 5 is an enlarged view of part A of FIG. 3, and FIG. 6 is a view illustrating a cross-section of a body portion of a thermal runaway blocking kit according to an embodiment of the present disclosure.

The thermal runaway blocking kit 250 may be disposed to cover a left side surface and a right side surface of a plurality of battery modules 100. That is, according to the present disclosure, the thermal runaway blocking kit 250 may be a side cover of a rack 200.

Referring to FIGS. 3 and 4, the thermal runaway blocking kit 250 may include a body portion 251 and a pair of side frames 252 coupled to the body portion 251.

The body portion 251 may be disposed on both sides of the plurality of battery modules 100. The plurality of battery modules 100 may be accommodated in the rack 200 in a state of being mounted on the body portion 251. To this end, the body portion 251 may include a protrusion portion 2511 protruding toward the plurality of battery modules 100 on a surface facing the plurality of battery modules 100.

The protrusion portion 2511 may be in the form of a bar extending from one end of the body portion 251 to the other end thereof. An extension direction of the protrusion portion 2511 may be a direction correspond to a longitudinal direction (Y-direction based on the drawing) of the plurality of battery modules 100. Additionally, the body portion 251 may be provided with a plurality of protrusion portions 2511 in a height direction, and adjacent protrusion portions 2511 may alternately have a first interval d1 and a second interval d2. For example, the battery module 100 may be inserted between two protrusion portions 2511 having the first interval d1, and the plurality of battery modules 100 may be arranged at a second gap d2 in the height direction.

The body portion 251 may be comprised of at least two frames. In other words, the body portion 251 may be formed by coupling at least two frames. For example, the body portion 251 may include a first frame 251a including the protrusion portion 2511, and a second frame 251b coupled to the first frame 251a in a position spaced apart from one surface of the first frame 251a having the protrusion portion 2511 formed therein by a predetermined distance, and since the first frame 251a and the second frame 251b are spaced apart from each other, an empty space 2512 may be formed therebetween.

In more detail, the first frame 251a may be formed in a ' 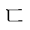 ' shape, and the second frame 251b may be formed in a thin plate shape and may be coupled to an open portion of the first frame 251a. The second frame 251b may be formed to a height sufficient to completely cover at least the open portion of the first frame 251a, and may preferably have a longer length in the height direction than the first frame 251a as illustrated in the drawing.

Since the first and second frames 251a and 251b have the above-described shapes, the empty space 2512 may be formed between the first frame 251a and the second frame 251b. According to an embodiment of the present disclosure, the empty space 2512 may contain an off-gas, and the like, generated by some battery modules 100 in which an event has occurred, among the plurality of battery modules 100 mounted on the body portion 251.

To this end, the body portion 251 may include a slot 2513 allowing the plurality of battery modules 100 mounted on the body portion 251 and the empty space 2512 provided between the first and second frames 251a and 251b to communicate with each other. As illustrated in FIG. 5, the slot 2513 may be provided on the protrusion portion 2511. The slot 2513 may extend along an extension direction of the protrusion portion 2511, but may not extend to both ends of the protrusion portion 2511 so that the battery module 100 may be mounted on the protrusion portion 2511.

Meanwhile, referring to FIG. 6, the first frame 251a may include a rib 2514 extending from the protrusion portion 2511 toward the empty space 2512 so as to be disposed in the empty space 2512 formed between the first frame 251a and the second frame 251b. The rib 2514 may extend from an upper side of the protrusion portion 2511 to the empty space 2512, and an end of the rib 2514 may have an inclined shape so as to face the slot 2513 formed between an upper side and a lower side of the protrusion portion 2511. For example, the end of the rib 2514 may have an inclined shape from the upper side to the lower side of the protrusion portion 2511.

According to an embodiment of the present disclosure, since the end of the rib 2514 is disposed to face the slot 2513, the off-gas (or gas) discharged from the battery module 100 during the occurrence of the event may be prevented from directly contacting the second frame 251b. That is, the rib 2514 may prevent thermal damage to the second frame 251b, and a structural stability of the body portion 251 may be improved.

Additionally, according to an embodiment of the present disclosure, since the end of the rib 2514 has a shape inclined from the upper side to the lower side, the residue generated together with the off-gas may be prevented from flowing back into an interior of the rack 200 in which a plurality of battery modules 100 are accommodated.

According to an embodiment of the present disclosure, during the occurrence of the event, since the off-gas discharged from the battery module 100 is confined in the empty space 2512 provided in the body portion 251 of the thermal runaway blocking kit 250, the off-gas may be blocked from external oxygen and may self-extinguish over a certain period of time.

Meanwhile, the body portion 251 may be designed so that the empty space 2512 has a volume of about 300 to 400 liters (L). In detail, according to an embodiment of the present disclosure, one rack 200 may accommodate four battery modules 100, and when an event occurring in one or some battery modules 100 spreads to adjacent battery modules 100, a maximum of four battery modules 100 may explode. In general, when a thermal runaway occurs, the off-gas that may be generated by one battery module 100 may be approximately 200 liters (L), and thus, when four battery modules 100 explode, approximately 800 liters (L) of off-gas may be generated.

According to an embodiment of the present disclosure, during the occurrence of the event, the off-gas discharged from the battery module 100 may be confined in the empty space 2512 provided in the thermal runaway blocking kit 250, and the empty space 2512 should be designed to have a volume sufficient to accommodate a maximum amount of off-gas that may be generated within one rack 200 in order to prevent the off-gas from leaking out. Referring to FIG. 2, in one battery rack 200, the thermal runaway blocking kit 250 may be provided in a pair and disposed to surround both sides of the plurality of battery modules 100, and thus, a single thermal runaway blocking kit 250 may be designed so that the empty space 2512 has a volume of about 400 liters (L). However, as will be described below, the pair of side frames 252 coupled to the body portion 251 may include a venting hole 2525 for relieving internal pressure of the empty space 2512 in a state in which the off-gas is confined, and in consideration thereof, the empty space 2512 may be designed to have a volume of about 300 to 400 liters (L).

However, the volume of the empty space 2512 described above is only an example, and the volume of the empty space 2512 may be designed differently depending on the number of battery modules 100 accommodated by one rack 200.

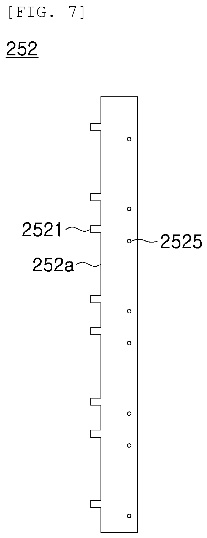

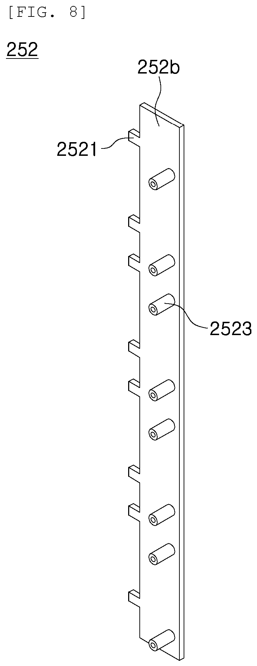

FIG. 7 is a view illustrating an outer surface of the side of the thermal runaway blocking kit according to an embodiment of the present disclosure, and FIG. 8 is a view illustrating an inner side of a side portion of the thermal runaway blocking kit according to an embodiment of the present disclosure.

A pair of side frames 252 may be connected to both ends of the body 251 to close the empty space 2512. To this end, the side frames 252 may be formed in a shape corresponding to an open side surface in a state in which the first frame 251a and the second frame 251b are coupled to each other. For example, the side frame 252 may include a plurality of protrusion portions 2521 to close the protrusion portion 2511 of the first frame 251a on one side thereof. The off-gas discharged from the battery module 100 may be confined in the empty space 2512 as the pair of side frames 252 are coupled to both ends of the body portion 251.

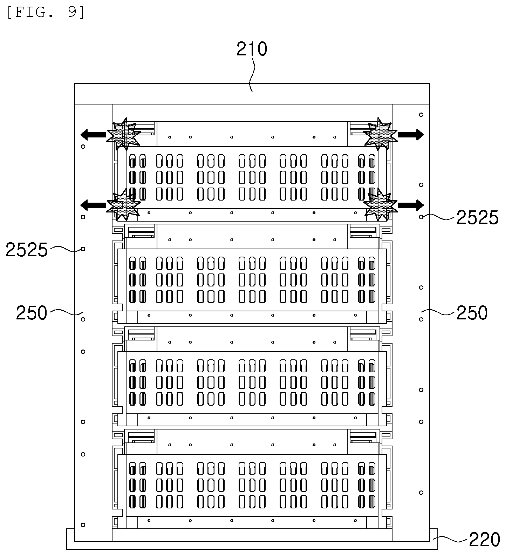

Referring to FIG. 7, an outer side 252a of the side frame 252 may include a plurality of venting holes 2525 provided in a longitudinal direction of the side frame 252. As described above, the plurality of venting holes 2525 may be provided to prevent the internal pressure of the empty space 2512 from excessively increasing as the off-gas is confined in the empty space 2512. For example, four to ten venting holes 2525 may be provided in the longitudinal direction of the outer side 252a of the side frame 252. Additionally, a diameter of the venting holes 2525 may be 8 to 15 mm. Additionally, as illustrated in FIG. 9, the side frame 252 disposed on the left side and the side frame 252 disposed on the right side based on the plurality of battery modules 100 may have the plurality of venting holes 2525 at different heights.

Referring to FIG. 8, an inner side 252b of the side frame 252 may include a plurality of tubes 2523 provided in the longitudinal direction of the side frame 252. The plurality of tubes 2523 may be formed in positions corresponding to the plurality of venting holes 2525 provided on the outer side 252a of the side frame 252. The tube 2523 may be in a form protruding from the inner side 252b of the side frame 252 toward the empty space 2512, and a conduit through which gas or the like flows may be formed inside the tube 2523. Since the side frame 252 includes such a tube 2523, the off-gas existing in the empty space 2512 may be discharged to the outside through the venting hole 2525 via the conduit. Accordingly, only the off-gas may be selectively discharged through the venting hole 2525, and flames or flame ash, which may worsen the event situation, may not be discharged to the outside.

FIG. 9 is a view illustrating a state in which a battery module is mounted on a thermal runaway blocking kit according to an embodiment of the present disclosure and a venting path.

Referring to FIG. 9, the battery module 100 may be stacked inside the rack 200 in a state of being mounted on a side cover, i.e., the thermal runaway blocking kit 250. Additionally, during the occurrence of the event, the off-gas generated by the battery module 100 may be discharged to a side surface of the battery module 100 and may be accommodated in the empty space 2512 provided in the body portion 251 through the slot 2513. Meanwhile, the thermal runaway blocking kit 250 may include a plurality of venting holes 2525 provided in the side frame 252 so that the internal pressure of the empty space 2512 is relieved according to the amount of off-gas discharged from the battery module 100, and the off-gas 2525 accommodated in the empty space 2512 may be discharged to the outside through the plurality of venting holes 2525 in an appropriate situation.

In this manner, the energy storage system 10 according to an embodiment of the present disclosure may be configured so that a thermal runaway situation may be resolved in the unit of the rack 200.

As described above, the energy storage system 10 according to an embodiment of the present disclosure may have high stability against fire. Additionally, since the energy storage system 10 is configured to block thermal runaway in the unit of the rack 200, free design may be performed without being bound by various system standards related to fire response.

Although the configurations and characteristics of the present disclosure have been described based on the example embodiment of the present disclosure, the present disclosure is not limited thereto, and it is apparent to those skilled in the art to which the present disclosure belongs that various changes or modifications may be made within the concept and scope of the present disclosure, and thus it will be revealed that such changes or modifications fall within the appended claims.

## Claims

1. An energy storage system, comprising:
a plurality of battery modules arranged in a stacked manner; and
a battery rack including a pair of thermal runaway blocking kits covering the plurality of battery modules on both sides thereof,
wherein the pair of thermal runaway blocking kits comprise:
a body portion on which the plurality of battery modules are mounted and which comprises an empty space in which gas discharged from one or more battery modules is confined; and
a side frame coupled to the body portion to cover the empty space.

2. The energy storage system of claim 1, wherein the body portion comprises:
a first frame including a protrusion portion on which the plurality of battery modules are mounted; and
a second frame coupled to the first frame in a position spaced apart from one surface of the first frame having the protrusion portion formed therein by a predetermined distance,
wherein the empty space is provided between the first frame and the second frame.

3. The energy storage system of claim 2, wherein the body portion further comprises a slot provided in the protrusion portion to allow the plurality of battery modules and the empty space to communicate with each other.

4. The energy storage system of claim 3, wherein the body portion further comprise a rib extending from the protrusion portion toward the empty space,
wherein an end of the rib has a shape inclined to face the slot.

5. The energy storage system of claim 1, wherein the side frame includes a plurality of venting holes through which gas confined in the empty space is discharged to the outside in a longitudinal direction of the side frame.

6. The energy storage system of claim 5, wherein each of a side frame included in a thermal runaway blocking kit disposed on one surface of the plurality of battery modules, among the pair of thermal runaway blocking kits, and a side frame included in a thermal runaway blocking kit disposed on the other surface thereof comprises the plurality of venting holes at different heights.

7. The energy storage system of claim 5, wherein the side frame further comprises a plurality of tubes formed to protrude toward the empty space in positions corresponding to the plurality of venting holes.

8. The energy storage system of claim 1, wherein one or more of the battery racks are provided in a direction, perpendicular to a stacking direction of the plurality of battery modules.

9. A battery rack, comprising:
a plurality of battery modules arranged in a stacked manner in one direction; and
a plurality of covers disposed on an outer side of the plurality of battery modules, wherein the plurality of covers are disposed on both sides of the plurality of battery modules,
wherein the battery rack comprises a pair of thermal runaway blocking kits including:
a body portion on which the plurality of battery modules are mounted and which includes an empty space in which gas discharged from one or more battery modules is confined; and
a side frame coupled to the body portion to cover the empty space.

10. The battery rack of claim 9, wherein the body portion comprises:
a first frame including a protrusion portion provided in an arrangement direction of the plurality of battery modules so that the plurality of battery modules are mounted, and having a ' 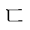 ' shape, and
a second frame having a plate shape, and coupled to an open portion of the first frame,
wherein the empty space is provided between the first frame and the second frame.

11. The battery rack of claim 10, wherein the body portion further comprises a slot provided in the protrusion portion to allow the plurality of battery modules and the empty space to communicate with each other in an arrangement direction of the plurality of battery modules.

12. The battery rack of claim 11, wherein the body portion further comprises a rib extending from the protrusion portion toward the empty space,
wherein an end of the rib has a shape inclined to face the slot.

13. The battery rack of claim 10, wherein the side frame comprises a plurality of venting holes through which gas confined in the empty space is discharged to the outside.

14. The battery rack of claim 13, wherein the side frame further comprises a plurality of tubes formed to protrude toward the empty space in positions corresponding to the plurality of venting holes.

15. The battery rack of claim 9, wherein the plurality of covers comprises a lower cover disposed to cover the plurality of battery modules from a lower side thereof, and
the pair of thermal runaway blocking kits are disposed on an inner side of the lower cover.
